# FASCICULE DE BREVET EUROPEEN

(11) **EP 2 186 686 B1**
(45) Date de publication et mention de la délivrance du brevet: **12.10.2011**
(21) Numéro de dépôt: 09173687.6
(22) Date de dépôt: 21.10.2009
(51) Int. Cl.: B60R 16/04, B60R 21/34, B60K 1/04, B62D 25/08, G05G 1/32, H01M 2/10

(54) **Dispositif de déplacement d'un élément rigide, et véhicule équipé d'un tel dispositif**
Verschiebungsvorrichtung eines starren Elements und mit einer solchen Vorrichtung ausgestattetes Fahrzeug
Shifting device for rigid element and vehicle equipped therewith

(30) Priorité: 14.11.2008 FR 0857744
(43) Date de publication de la demande: 19.05.2010
(73) Titulaire: Peugeot Citroën Automobiles SA, 78140 Vélizy-Villacoublay (FR)
(72) Inventeur: Raymond, Frédéric, 77176, Savigny le Temple (FR); Feriot, Bertrand, 91210, Draveil (FR); Lefevre, Frédéric, 75011, PARIS (FR)

(56) Documents cités:
- EP-A- 1 403 144
- DE-A1- 4 331 900
- FR-A- 2 744 965
- JP-A- 8 192 639
- US-A- 5 476 151
- US-A1- 2006 076 800

## Description

La présente invention concerne un dispositif de déplacement d'un élément rigide, ainsi qu'un véhicule équipé d'un tel dispositif.

Plus particulièrement, l'invention concerne un dispositif de déplacement d'un élément rigide monté sur un élément de structure d'un véhicule automobile par l'intermédiaire d'un support dédié et d'un moyen de fixation associé.
Un dispositif comprenant les caractéristiques du préambule de la revendication 1 est connu du document US 2006/0076800 A1.

Il est aussi connu de disposer une batterie d'alimentation en énergie d'un circuit électrique d'un véhicule, dans le compartiment moteur de ce dernier. Cela est avantageux dans le sens où la batterie est située au plus proche des équipements électriques qu'elle se doit d'alimenter en énergie. Toutefois, une telle situation de la batterie dans le véhicule est engendre un risque de destruction des pièces environnantes lors d'un choc. En effet, le poids d'un tel élément nécessite l'adjonction de moyen de retenue spécifiquement calibré pour maintenir la batterie sur un support lors d'un choc entre le véhicule et un obstacle.

L'utilisation grandissante des équipements électriques, voire le recours à cette énergie pour le déplacement d'un véhicule, provoque un accroissement des besoins en énergie électrique qui se traduit par une augmentation du poids de cet élément rigide.

La batterie est habituellement disposée à proximité immédiate d'un organe d'un système de freinage, qui a pour fonction d'amplifier l'effort de freinage et que l'on connait également sous le nom commercial Isovac®, est lié à une pédale de frein au moyen d'une tige de liaison.

On a remarqué qu'en cas de choc frontal à haute vitesse du véhicule avec un obstacle, la batterie se déplace d'avant vers arrière, venant ainsi en contact avec l'Isovac®, ce qui engendre le recul d'une pièce transversale de carrosserie sur laquelle l'Isovac® est fixé. Une telle pièce de carrosserie est parfois nommée tablier et est destinée à séparer l'habitacle du compartiment moteur. Compte tenu que la pédale s'étendant dans l'habitacle est liée au tablier au moyen d'une pièce support, le recul du tablier d'avant vers l'arrière du véhicule provoque celui de la pédale de frein, ce qui est néfaste pour la protection du conducteur.

L'agencement en sandwich de l'Isovac® entre la batterie et le tablier, pose ainsi le problème quand cas de choc, la batterie se comporte comme un élément rigide de grande inertie, que les seuls éléments de maintien associés ne peuvent contenir le déplacement en cas de choc à haute vitesse. Par voie de conséquent, un choc à haute vitesse se traduit par une déformation dudit tablier de support d'une pédale.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que
- ledit support comprend une portion avant et une portion arrière montée articulée en rotation l'une sur l'autre, chaque portion étant reliées à l'élément de structure par des première et seconde équerre de liaison destinées à se rapprocher l'une de l'autre par déformation de l'élément de structure,
- en l'état déformé de l'élément de structure, les portions avant et arrière délimitent respectivement des rampes ascendante et descendante par rapport une direction allant de l'avant à l'arrière du véhicule, chaque rampe délimitant en partie supérieure par une ligne sommitale sur laquelle l'élément rigide est apte à coulisser d'avant vers l'arrière du véhicule.

Un tel dispositif permet à l'élément rigide d'assurer une fonction dans la sécurité passive du véhicule par le biais d'un déplacement indexé à la déformation d'un élément de structure du véhicule.

Par ailleurs, le dispositif de l'invention peut comporter l'une ou plusieurs des caractéristiques suivantes :
- le support comprend au moins une charnière d'articulation liant ensemble les portions avant et arrière du support,
- le support est réalisée en acier, et il comprend un embouti formant une ligne de pliure qui s'étend en tout ou partie le long de la largeur du support ;
- la ligne de pliure est de section en demi-rond ;
- le support comprend une ouverture centrale délimitant des bras de liaison des portions avant et arrière, chaque bras de liaison étant déformable ;
- en position initiale de l'élément rigide sur son support, la charnière d'articulation est située verticalement entre lesdites première et seconde équerres de liaison,
- l'élément rigide est une batterie d'alimentation en énergie d'un circuit électrique du véhicule.

En outre, l'objet de la présente invention a aussi trait à un véhicule automobile comportant un dispositif de freinage formé d'au moins un actionneur relié à un organe de commande, l'actionneur étant disposé dans le compartiment moteur du véhicule et fixé à un élément de structure, l'organe de commande s'étendant dans l'habitacle du véhicule en étant fixé au côté opposé de l'élément de structure, le compartiment moteur comprenant un élément rigide, caractérisé en ce qu'il comprend un dispositif de déplacement de l'élément rigide comportant l'une quelconque des caractéristiques susmentionnées.

Par ailleurs, le véhicule de l'invention peut comporter l'une ou plusieurs des caractéristiques suivantes :
- l'élément rigide est destiné à prendre une position surélevée et reculée en appui sur l'actionneur, selon un mouvement de rotation de l'élément rigide par rapport à un axe de rotation s'étendant transversalement à celui-ci, provoquant de la sorte la rotation de l'actionneur autour d'un axe parallèle audit axe de rotation de l'élément rigide et s'étendant au travers de l'élément de structure sur lequel sont fixés l'actionneur et l'organe de commande.
- la liaison de l'actionneur et de l'organe de commande sur le même élément de structure engendre un déplacement de l'actionneur en concomitance de celui de l'organe de commande vers une position rétractée vers le compartiment moteur, selon un mouvement de rotation.

D'autres avantages et particularités de l'invention ressortent de la description de modes de réalisation faite ci-après en référence aux dessins annexés dans lesquels :
- la figure 1 est une représentation schématique partielle d'une partie d'un véhicule automobile vue en perspective, dans laquelle une batterie, formant un élément rigide à forte inertie, est fixée à la structure du véhicule par un dispositif selon l'invention,
- les figures 2 et 3 sont des représentations schématiques montrant différents états de déplacement de la batterie de la figure 1 par rapport à des éléments environnants, qui sont obtenus par le dispositif de déplacement selon l'invention,
- la figure 4 représente selon une vue en perspective le dessous le dispositif de l'invention de la figure 1.

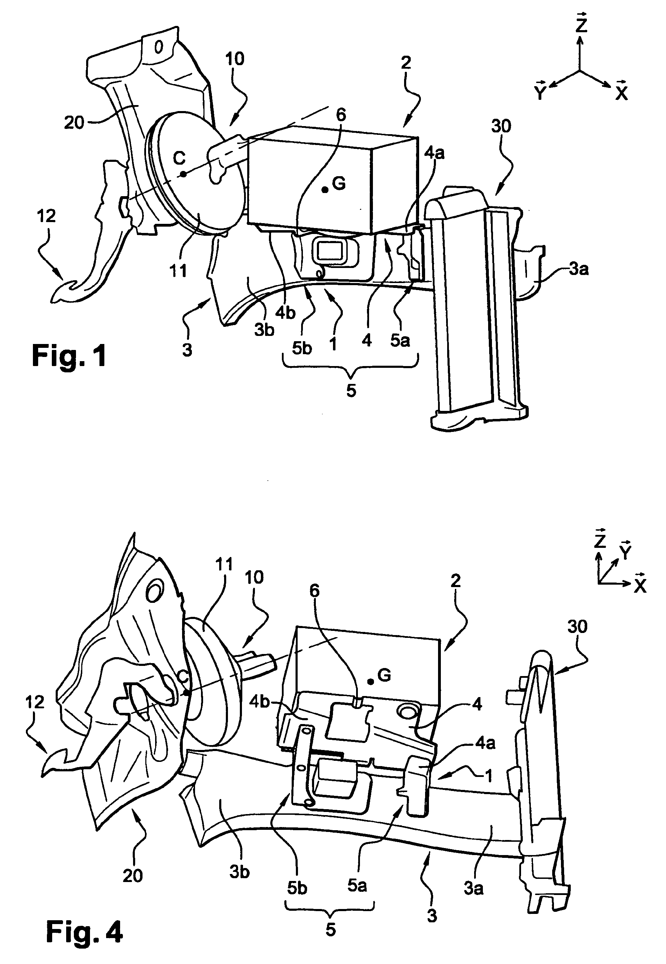

En se reportant à la figure 1, il est représenté un dispositif de déplacement d'un élément rigide, qui est de préférence du type d'une batterie prenant le repère général 2. Pour se faire, la batterie 2 est montée sur un élément de structure 3 comportant une partie avant 3a susceptible de se déformer par compression lors d'un choc frontal du véhicule contre un obstacle externe, et d'une partie arrière 3b de plus grande rigidité.

La partie avant 3a du brancard est conformée de sorte qu'elle absorbe par déformation l'énergie d'un choc. A contrario, la partie arrière 3b, qui est située au prolongement de la partie avant 3a comporte de préférence des éléments de renfort qui sont destinés à augmenter sa rigidité, donc sa tenue à la déformation par compression.

L'élément de structure 3 sur lequel la batterie 2 est fixée au moyen d'un support 4 est de préférence une pièce de brancard, qui sert également à la fixation du groupe motopropulseur qui comprend à titre d'exemple une boîte de vitesses ainsi qu'un moteur de type à combustion. Chaque brancard 3 s'étend longitudinalement au véhicule selon un axe parallèle à l'axe X-X. Seul l'un d'entre les deux brancards avant du véhicule est représenté sur les figures, sachant que par symétrie par rapport à un plan médian d'axe longitudinal X-X, le véhicule comprend un second brancard.

Le dispositif de l'invention comprend un support 4 de batterie 2 et un moyen 5 de fixation du support 4 à la structure 3 du véhicule, qui seront décrits plus en détails dans ce qui suit.

Comme cela est rendu visible sur les figures, le moyen 5 de fixation comprend une équerre 5b montée solidairement à la partie arrière 3b du brancard, par vissage, soudage, ou tout autre moyen de fixation équivalent, sur sa paroi intérieure verticale.

L'équerre 5b comprend donc une branche de liaison au brancard, qui s'étend de façon sensiblement parallèle à un axe vertical Z-Z, et une autre branche destinée à la liaison avec le support 4. Ladite autre branche s'étend parallèlement à un axe transversal Y-Y au véhicule, en direction de l'intérieur du véhicule, c'est-à-dire en direction du bloc moteur. Ladite autre branche est apte à servir d'axe de rotation autour duquel ledit support 4 de batterie est destiné à pivoter. Pour ce faire, ladite autre branche comprend une plaque déformable notamment au niveau de sa liaison avec la branche de liaison au brancard au prolongement de laquelle celle-ci s'étend.

Selon une variante de réalisation, ladite autre branche est de section sensiblement circulaire et monté à rotation sur une partie du support 4 formant pallier de sorte qu'un tel ensemble n'absorbe que peu d'énergie lors du déplacement de la batterie, favorisant ainsi son déplacement.

Ledit moyen formant support 4 de batterie 2 est également relié à la partie avant 3a dudit brancard 3 par sa partie avant 4a. La partie avant 4a de support de batterie est par conséquent également montée à déformation soit selon une fixation par vissage, soudage, ou tout autre moyen de fixation équivalent, dudit support au sur le brancard, soit par l'intermédiaire d'une équerre 5a de liaison dédiée assurant une liaison à l'identique de l'équerre 5b précédemment décrite. Indépendamment du mode de liaison, l'avant 4a du support est apte à subir lors d'un choc une déformation par rotation autour d'un axe parallèle à l'axe transversal Y-Y au véhicule, comme l'est la partie arrière 4b du support.

Chaque moyen formant la liaison du support 4 au brancard 3 est destiné à lier mécaniquement le support 4 au brancard 3 de sorte qu'en cas de choc frontal à haute vitesse, la compression selon l'axe longitudinal X-X du brancard 3 engendre un rapprochement des points de liaison du support au brancard, donc un rapprochement des parties avant 4a et arrière 4b du support 4.

Afin de rendre apte la rotation par déformation du support 4 lors d'un choc, une ouverture est ménagée sur les parties avant 4a et arrière 4b du support 4. Elles permettent en outre un passage des faisceaux électriques tout en assurant une fragilité du support, à l'opposée des rainures pratiquées sur les parties avant 4a et arrière 4b du support qui garantissent l'intégrité du support lors d'un choc à haute vitesse.

L'ouverture délimite des bras de liaison des portions avant 4a et arrière 4b du support, chaque bras s'étendant parallèlement à l'axe longitudinal X-X du véhicule et est, au vu de sa largeur, déformable.

La présence de l'ouverture centrale du support 4, telle que cela est rendue visible à la figure 4, créé une faiblesse du support qui ne nécessite alors pas la création d'emboutis formant la ligne de pliure.

Compte tenu que le support 4 est de préférence réalisé à partir d'au moins une plaque en acier, il est de préférence mis en forme par emboutissage ou pliage.

Il en est de même en ce qui concerne les éléments constitutifs dudit moyen 5 de fixation du support 4 au brancard 3.

Un tel dispositif de déplacement permet de déplacer facilement la batterie 2 d'une position initiale selon laquelle le support 4 délimite un plateau sur lequel repose la batterie, le plateau s'étendant dans un plan sensiblement horizontal et parallèle au brancard 3, à une position surélevée où au moins une des deux parties avant ou arrière de support 4 est inclinée par rapport au brancard et à la batterie qui garde une position sensiblement horizontale et parallèle au brancard 3.

Dans un mode de réalisation préférée, les parties avant et arrière du support 4 sont reliées l'une à l'autre au moyen d'une charnière 6 d'articulation.

Une telle charnière 6 est réalisée de préférence par emboutissage du support 4 et s'étend transversalement d'un côté à l'autre dudit support de batterie. Une telle charnière 6 forme ainsi une ligne de pliure qui sert à positionner chaque portion 4a ou 4b dans un état d'inclinaison.

La ligne de pliure issue de la charnière 6 et chaque point de liaison du support à une équerre 5 de fixation déterminent les sommets d'un triangle isocèle, la charnière 6 définissant le sommet principal du triangle. Par conséquent, une réduction de la longueur de la base du triangle, qui est générée par un rapprochement des équerres, donc des deux sommets de la base, engendre une augmentation de la hauteur issue du sommet principal.

C'est ainsi que les portions 4a et 4b délimitent des zones surfaciques d'appui sur laquelle la batterie 2 repose. Plus particulièrement, dans la position initiale de la batterie, les portions 4a et 4b définissent des surfaces d'appui qui s'étendent dans un même plan horizontal, chaque surface d'appui étant contigüe entre elles et au prolongement l'une de l'autre.

Le rapprochement des axes de rotation engendre par contre le déplacement des portions 4a et 4a dans des plans inclinés par rapport au brancard.

Le choc frontal entre le véhicule comportant le dispositif de l'invention et un obstacle extérieur au véhicule engendre, selon la force de l'impact, un écrasement de la partie avant déformable 3a du brancard, ce qui se traduit avantageusement par le rapprochement des équerre dudit moyen 5 de fixation liant le support 4 à la structure du véhicule. En concomitance d'un tel rapprochement longitudinal, les portions 4a et 4b pivotent par déformation autour des équerres dudit moyen 5 de fixation du support à la structure du véhicule, passant ainsi d'une position initiale sensiblement parallèle au brancard à une position d'inclinaison par rapport à ce dernier.

Dans ce dernier cas, les portions 4a et 4b sont inclinées vers le haut, respectivement selon un sens allant de l'avant vers l'arrière et un sens inversé. Chaque portion 4a ou 4b délimite alors une ligne sommitale, d'axe sensiblement parallèle à l'axe transversal Y-Y du véhicule, sur laquelle la base de la batterie 2 est en appui. Les lignes sommitales, qui sont en outre définies par les extrémités avant et arrière respectivement des portions arrière 4b et avant 4a, restent reliées entre elles, notamment par l'intermédiaire de la charnière 6 d'articulation.

Le passage de la position initiale avant choc à la position inclinée après choc, permet une élévation de la batterie le long d'un axe vertical Z-Z. Concomitamment à ce déplacement d'élévation, les organes d'un bloc fonctionnel 30 situé en avant de la batterie, lesquels sont par exemple du type groupe moto-ventilateur, provoquent le déplacement vers l'arrière du véhicule, de la batterie 2. Un tel mouvement est obtenu par le biais d'un coulissement, le long de l'axe longitudinal X-X de la batterie 2 sur au moins l'une des lignes sommitales de la plaque 4 de support.

Un tel mouvement est remarquable en ce qu'il s'apparente à un mouvement de pivotement de la batterie autour d'un axe transversal passant par un point C de rotation qui se trouve sensiblement situé au niveau d'un élément de structure formant un tablier 20 sur lequel est monté un amplificateur 11 de freinage.

Le support 4 disposé en l'état incliné après un choc frontal, ne retient pas longitudinalement la batterie 2, cette dernière étant en effet supportée par des lignes sommitales dépourvues de butée de retenue en X. La batterie 2 est donc apte à se déplacer vers l'arrière du véhicule, venant ainsi en appui contre l'amplificateur 11 de freinage.

Par conséquent, l'amplificateur 11 de freinage qui est en outre situé sensiblement transversalement au droit de la batterie 2 utilise le mouvement de rotation de la batterie 2 autour d'un axe passant par le point C, qui est de préférence situé approximativement au centre de la zone de liaison de l'amplification 11 au tablier 20, pour pivoter également autour d'un axe transversal Y-Y passant par ou à proximité de ce même point C.

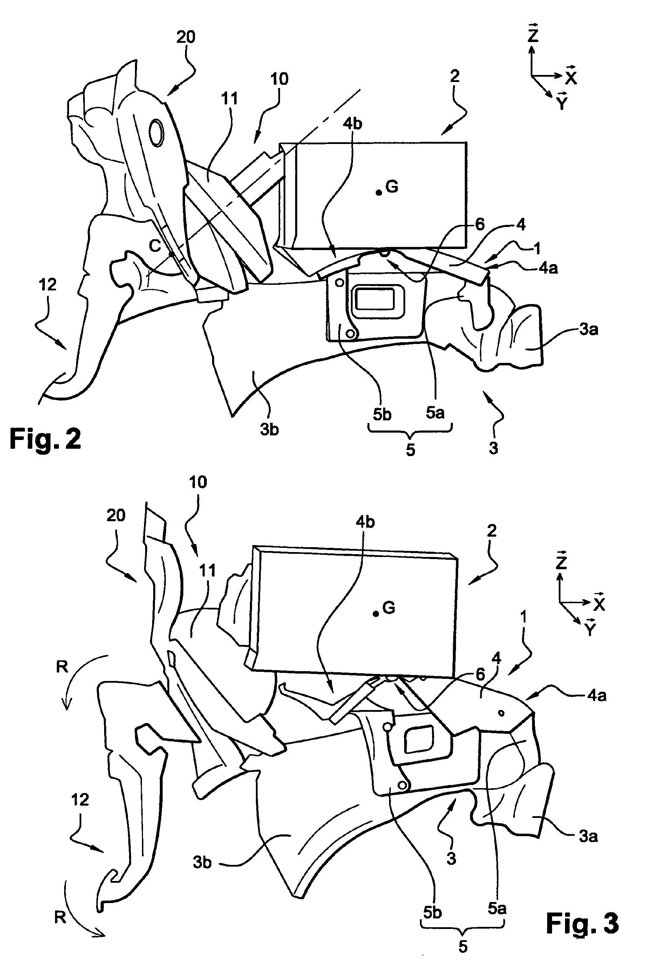

C'est ainsi qu'un véhicule automobile pourvu d'un tel dispositif de déplacement de la batterie permet un déplacement en rotation de l'amplificateur 11 de freinage. Etant donné la fixation de chaque pédale 12 sur le côté opposé du tablier sur lequel est fixé l'amplificateur 11, le déplacement de celui-ci entraîne le déplacement de la pédale 12 de commande du freinage selon la flèche R de la figure 3. Ceci a pour avantage de rapprocher l'extrémité de la pédale 12 du tablier 20, c'est-à-dire de l'amener dans une position rétractée de non agressivité envers le conducteur du véhicule.

Un véhicule automobile comportant un tel dispositif de déplacement de la batterie est remarquable en ce que la batterie 2 est située, dans sa position initiale, de telle sorte que le centre de gravité G est disposé moins haut que le point C. Située ainsi au plus proche du brancard, la batterie 2 n'est pas considérée comme un point dur qui serait alors jugé néfaste en cas de choc du véhicule avec un piéton. Par contre, le dispositif de déplacement de la batterie 2 de l'invention, permet en cas de choc d'élever la batterie 2 de sorte que le centre de gravité G est situé au dessus du point C, favorisant de la sorte l'amplificateur 11 dudit système de freinage à se déplacer autour du tablier 20. Le véhicule équipé de ce dispositif est donc d'une sureté améliorée notamment en ce qui concerne celle du conducteur.

Bien entendu, le dispositif de déplacement d'un élément rigide a été décrit pour déplacer une batterie, sans pour autant être limitatif à cette seule utilisation. Il est donc rendu possible, selon d'autre mode d'utilisation du dispositif de l'invention, que le dispositif selon l'invention permette le déplacement d'un autre élément rigide, par exemple un réservoir d'eau d'un circuit de refroidissement du moteur ou une roue de secours située dans le compartiment moteur, lesquels sont également du type à forte inertie.

## Revendications

1. Dispositif (1) de déplacement d'un élément (2) rigide monté sur un élément (3) de structure d'un véhicule automobile par l'intermédiaire d'un support (4) dédié et d'un moyen (5) de fixation associé, ledit support (4) est monté à rotation sur l'élément de structure par ledit moyen (5) de fixation, pour passer d'une position initiale à une position d'inclinaison dite de surélévation de l'élément (2) rigide, lors de la déformation par compression de l'élément (3) de structure, ledit support comprenant une portion avant (4a) et une portion arrière (4b) montée articulée en rotation l'une sur l'autre, chaque portion (4a, 4b) étant reliées à l'élément (3) de structure par des première (5a) et seconde (5b) équerres de liaison destinées à se rapprocher l'une de l'autre par déformation de l'élément (3) de structure, en l'état déformé de l'élément (3) de structure, les portions avant et arrière (4a, 4b) délimitent respectivement des rampes ascendante et descendante par rapport à une direction allant de l'avant à l'arrière du véhicule, **caractérisé en ce que** chaque rampe délimité en partie supérieure une ligne sommitale sur laquelle l'élément (2) rigide est apte à coulisser.

2. Dispositif selon la revendication 1, **caractérisé en ce que** le support (4) comprend au moins une charnière (6) d'articulation liant ensemble les portions avant (4a) et arrière (4b) du support.

3. Dispositif selon la revendication 1 ou 2, **caractérisé en ce que** le support (4) est réalisée en acier, et **en ce qu'**il comprend un embouti formant une ligne de pliure qui s'étend en tout ou partie le long de la largeur du support.

4. Dispositif selon la revendication 3, **caractérisé en ce que** la ligne de pliure est de section en demi-rond.

5. Dispositif selon l'une quelconque des revendications 1 à 4, **caractérisé en ce que** le support (4) comprend une ouverture centrale délimitant des bras de liaison des portions avant (4a) et arrière (4b), chaque bras de liaison étant déformable.

6. Dispositif selon la revendication 2, **caractérisé en ce qu'**en position initiale de l'élément (2) rigide sur son support, la charnière (6) d'articulation est située horizontalement entre lesdites première et seconde équerres (5a, 5b) de liaison.

7. Véhicule automobile comportant un dispositif (10) de freinage formé d'au moins un actionneur (11) relié à un organe (12) de commande, l'actionneur étant disposé dans le compartiment moteur du véhicule et fixé à un élément de structure, l'organe de commande s'étendant dans l'habitacle du véhicule en étant fixé au côté opposé de l'élément de structure, le compartiment moteur comprenant un élément (2) rigide **caractérisé en ce qu'**il comprend un dispositif (1) de déplacement de l'élément (2) rigide conforme à l'une quelconque des revendications précédentes.

8. Véhicule selon la revendication 7, **caractérisé en ce que** l'élément (2) rigide est une batterie d'alimentation en énergie d'un circuit électrique du véhicule.

9. Véhicule selon la revendication 7 ou 8, **caractérisé en ce que** l'élément (2) rigide est destiné à prendre une position surélevée et reculée en appui sur l'actionneur (11), selon un mouvement de rotation de l'élément rigide par rapport à un axe de rotation (C) s'étendant transversalement à celui-ci, provoquant de la sorte la rotation de l'actionneur autour d'un axe parallèle audit axe de rotation de l'élément rigide et s'étendant au travers de l'élément de structure sur lequel sont fixés l'actionneur (11) et l'organe de commande (12).

10. Véhicule selon la revendication 9, **caractérisé en ce que** la liaison de l'actionneur et de l'organe de commande sur le même élément de structure engendre un déplacement de l'actionneur (11) en concomitance de celui de l'organe (12) de commande vers une position rétractée vers le compartiment moteur, selon un mouvement de rotation.

## Claims

1. Device (1) for displacing a rigid member (2), which is mounted on a structural member (3) of a motor vehicle via a dedicated support (4) and an associated fixing means (5), said support (4) being mounted rotatably on the structural member by way of said fixing means (5), in such a way that the rigid member (2) passes from an initial position to an inclined position, referred to as a raised position, when the structural member (3) is deformed under compression, said support comprising a front portion (4a) and a rear portion (4b) which are mounted hinged rotatably on one another, each portion (4a, 4b) being connected to the structural member (3) by way of first (5a) and second (5b) connecting brackets which are intended to approach one another when the structural member (3) is deformed, the front and rear portions (4a, 4b) delimiting ramps, which ascend and descend respectively in the direction from the front to the rear of the vehicle, when the structural member (3) is deformed, **characterised in that** the upper part of each ramp defines a peak line on which the rigid member (2) can slide.

2. Device according to claim 1, **characterised in that** the support (4) comprises at least one articulating hinge (6) interconnecting the front (4a) and rear (4b) support portions.

3. Device according to either claim 1 or claim 2, **characterised in that** the support (4) is made of steel and **in that** it comprises an end piece forming a fold line which extends along part or all of the width of the support.

4. Device according to claim 3, **characterised in that** the fold line is of a semi-circular section.

5. Device according to any one of claims 1 to 4, **characterised in that** the support (4) comprises a central opening defining arms for connecting the front (4a) and rear (4b) portions, each connecting arm being deformable.

6. Device according to claim 2, **characterised in that** when the rigid member (2) is in the initial position thereof on the support thereof, the articulating hinge (6) is located horizontally between said first and second connecting brackets (5a, 5b).

7. Motor vehicle comprising a braking device (10) formed of at least one actuator (11) connected to a control member (12), the actuator being arranged in the engine compartment of the vehicle and fixed to a structural member, the control member extending into the passenger compartment of the vehicle and being fixed to the side opposing the structural member, the engine compartment comprising a rigid member (2), **characterised in that** it comprises a device (1) for displacing the rigid member (2) in accordance with any one of the preceding claims.

8. Vehicle according to claim 7, **characterised in that** the rigid member (2) is a battery for powering an electric circuit of the vehicle.

9. Vehicle according to either claim 7 or claim 8, **characterised in that** the rigid member (2) is intended to take on a raised position, held back in contact with the actuator (11), in a rotational movement of the rigid member about an axis of rotation (C) extending transverse thereto, thus inducing the rotation of the actuator about an axis which is parallel to said axis of rotation of the rigid member and extends across the structural element to which the actuator (11) and the control member (12) are fixed.

10. Vehicle according to claim 9, **characterised in that** the connection of the actuator and the control member to the same structural member leads to a displacement of the actuator (11), in conjunction with that of the control member (12), towards a position retracted towards the engine compartment, in a rotational movement.

## Patentansprüche

1. Vorrichtung (1) zum Verschieben eines starren Elements (2), das auf ein Strukturelement (3) eines Kraftfahrzeugs montiert ist, vermittels eines dafür bestimmten Trägers (4) und eines zugehörigen Befestigungsmittels (5), wobei der besagte Träger (4) mit dem besagten Befestigungsmittel (5) in Drehung auf das Strukturelement montiert ist, um von einer Ausgangsposition zu einer Neigungsposition, der sogenannten Überhöhung des starren Elements (2), zu gehen, und dies bei der Verformung durch Kompression des Strukturelements (3), wobei der besagte Träger einen vorderen Abschnitt (4a) und einen hinteren Abschnitt (4b) umfasst, die in Drehung der eine auf dem anderen angelenkt sind, wobei jeder Abschnitt (4a, 4b) mit einem ersten (5a) und zweiten (5b) Verbindungswinkel mit dem Strukturelement (3) verbunden ist, die sich durch Verformung des Strukturelements (3) einander annähern sollen, wobei im verformten Zustand des Strukturelements (3) der vordere und der hintere Abschnitt (4a, 4b) eine aufsteigende beziehungsweise absteigende Rampe im Verhältnis zu einer von vorne nach hinten des Fahrzeugs gehenden Richtung begrenzen, **dadurch gekennzeichnet, dass** jede Rampe im oberen Teil eine Gipfellinie begrenzt, auf der das starre Element (2) gleiten kann.

2. Vorrichtung nach Anspruch 1, **dadurch gekennzeichnet, dass** der Träger (4) zumindest ein Gelenkscharnier (6) umfasst, das den vorderen Abschnitt (4a) und den hinteren Abschnitt (4b) des Trägers miteinander verbindet.

3. Vorrichtung nach Anspruch 1 oder 2, **dadurch gekennzeichnet, dass** der Träger (4) aus Stahl ausgeführt ist, und **dadurch**, dass er ein Stulpblech umfasst, das eine Falzlinie bildet, die sich vollständig oder teilweise entlang der Breite des Trägers erstreckt.

4. Vorrichtung nach Anspruch 3, **dadurch gekennzeichnet, dass** die Falzlinie einen halbrunden Querschnitt hat.

5. Vorrichtung nach einem beliebigen der vorstehenden Ansprüche 1 bis 4, **dadurch gekennzeichnet, dass** der Träger (4) eine zentrale Öffnung umfasst, die Verbindungsarme des vorderen Abschnitts (4a) und des hinteren Abschnitts (4b) begrenzt, wobei jeder Verbindungsarm verformbar ist.

6. Vorrichtung nach Anspruch 2, **dadurch gekennzeichnet, dass** in Ausgangsposition des starren Elements (2) auf seinem Träger sich das Gelenkscharnier (6) horizontal zwischen dem besagten ersten und zweiten Verbindungswinkel (5a, 5b) befindet.

7. Kraftfahrzeug mit einer Bremsvorrichtung (10), die aus zumindest einem Betätigungsglied (11) gebildet wird, das mit einem Steuerorgan (12) verbunden ist, wobei das Betätigungsglied im Motorfach des Fahrzeugs angeordnet und an einem Strukturelement befestigt ist, wobei sich das Steuerorgan im Fahrgastraum des Fahrzeugs erstreckt, wobei es auf der entgegengesetzten Seite vom Strukturelement befestigt ist, wobei das Motorfach ein starres Element (2) umfasst, **dadurch gekennzeichnet, dass** es eine Vorrichtung (1) zum Verschieben des starren Elements (2) nach einem beliebigen der vorstehenden Ansprüche umfasst.

8. Fahrzeug nach Anspruch 7, **dadurch gekennzeichnet, dass** das starre Element (2) eine Batterie zur Energieversorgung eines Stromkreises des Fahrzeugs ist.

9. Fahrzeug nach Anspruch 7 oder 8, **dadurch gekennzeichnet, dass** das starre Element (2) dazu bestimmt ist, eine überhöhte und zurückgezogene Position mit Auflage auf das Betätigungsglied (11) einzunehmen, und dies nach einer Rotationsbewegung des starren Elements im Verhältnis zu einer Rotationsachse (C), die sich quer zu dieser erstreckt und auf diese Weise die Rotation des Betätigungsglieds um eine Achse parallel zu besagter Rotationsachse des starren Elements auslöst und sich durch das Strukturelement erstreckt, auf dem das Betätigungsglied (11) und das Steuerorgan (12) befestigt sind.

10. Fahrzeug nach Anspruch 9, **dadurch gekennzeichnet, dass** die Verbindung des Betätigungsglieds und des Steuerelements auf dem gleichen Strukturelement zu einer Verschiebung des Betätigungsglieds (11) gleichzeitig mit demjenigen des Steuerorgans (12) zu einer zurückgezogenen Position zum Motorfach führt, und zwar gemäß einer Rotationsbewegung.
